# EUROPÄISCHE PATENTSCHRIFT

(11) **EP 2 585 359 B1**
(45) Veröffentlichungstag und Bekanntmachung des Hinweises auf die Patenterteilung: **27.08.2014**
(21) Anmeldenummer: 11725472.2
(22) Anmeldetag: 17.06.2011
(51) Int. Cl.: B62D 21/15, B62D 25/20, B62D 29/00

(54) **KAROSSERIE FÜR EIN KRAFTFAHRZEUG MIT EINEM BODEM, DER EIN QUERERSTRECKENDES STRANGPRESS PROFIL AUFWEIST**
BODY OF A VEHICLE HAVING A FLOOR WITH A TRANSVERSE EXTRUDED PROFILE
CARROSSERIE DE VÉHICULE AYANT UN PLANCHER COMPRENANT UN PROFILÉ EXTRUDÉ

(30) Priorität: 25.06.2010 DE 102010030515
(43) Veröffentlichungstag der Anmeldung: 01.05.2013
(73) Patentinhaber: Bayerische Motoren Werke Aktiengesellschaft, 80809 München (DE)
(72) Erfinder: LENZ, Juergen, 85777 Fahrenzhausen (DE); SCHNAUFER, Thomas, 84171 Baierbach (DE); FUCHS, Horst-Arno, 82319 Starnberg (DE)
(86) Internationale Anmeldenummer: PCT/EP2011/060095
(87) Internationale Veröffentlichungsnummer: WO 2011/161012

(56) Entgegenhaltungen:
- EP-A1- 1 902 931
- EP-A2- 0 937 630
- DE-A1-102005 024 263
- JP-A- 7 172 349
- JP-A- 7 179 185
- JP-A- 2008 087 667
- US-A1- 2002 014 008

## Beschreibung

Die Erfindung betrifft eine Karosserie für ein Kraftfahrzeug nach dem Oberbegriff des Patentanspruchs 1.

Im heutigen Kraftfahrzeugbau erstreckt sich bei einer Karosserie für ein Kraftfahrzeug üblicherweise ein Bodenblech zwei Seitenschwellern. Die Seitenschweller sind dabei meist in Schalenbauweise gebaut.

Aus der US 2002/0014008 A1 ist eine Karosserie eines Kraftfahrzeugs mit einem Boden bekannt. Der Boden besteht aus mehreren Strangpressprofilen und weist zumindest eine Hohlkammer auf.

Aus der EP 1902 93 1 A1 ist eine Karosserie für ein Kraftfahrzeug mit einem Boden gemäß dem Oberbegriff vom Anspruch 1.

Aufgabe der Erfindung ist es, eine Karosserie für ein Kraftfahrzeug mit einem Boden zu schaffen, der bei einem Seitencrash einen geringen Deformationsweg aufweist.

Diese Aufgabe wird mit einer Karosserie für ein Kraftfahrzeug mit den Merkmalen des Patentanspruchs 1 gelöst.

Erfindungsgemäß erstreckt sich in Fahrzeugquerrichtung zwischen zwei Seitenschwellern ein Boden, der aus einem Strangpressprofil besteht. Dieses Strangpressprofil weist zumindest eine Hohlkammer auf, dessen Längserstreckung in Fahrzeugquerrichtung verläuft. Wenn es mehrere Hohlkammern aufweist, sind diese in Fahrzeuglängsrichtung gesehen hintereinander angeordnet. Aufgrund der zumindest einen Hohlkammer weist der Boden insbesondere in Fahrzeugquerrichtung eine hohe Steifigkeit auf. Zudem kann der Boden aus einem Leichtmetall oder einer Leichtmetalllegierung bestehen. Dann ist der Boden in Relation zu seiner hohen Steifigkeit außerordentlich leicht. Auch kann der Boden eine ebene, flächige Unterseite aufweisen. Dies ist aerodynamisch sehr vorteilhaft, da so am Boden keine turbulenten Verwirbelungen entstehen können.

Der Boden ist im Bereich einer Sitzreihe mit einem dünnen, flächigen Verstärkungsbauteil aus einem faserverstärkten Kunststoff noch zusätzlich versteift. Dieses Verstärkungsbauteil erstreckt sich zwischen den beiden Seitenschwellern und liegt auf dem Boden auf. Der Verbund aus dem Boden und dem Verstärkungsbauteil weist eine sehr hohe Steifigkeit bei einem gleichzeitig geringen Gewicht auf.

Idealerweise ist das Kraftfahrzeug zumindest auch elektrisch antreibbar. Zumindest ein Akkumulator kann dann auf der Unterseite des Bodens angebracht sein. Er kann sich in Fahrzeuglängsrichtung erstrecken und in Fahrzeugquerrichtung im mittleren Bereich unter dem Boden angeordnet sein. Der erfindungsgemäße Boden weist eine sehr hohe Steifigkeit auf. Dadurch ist der zumindest eine Akkumulator auch bei einem Crash sehr gut geschützt. Zudem befindet er sich außerhalb der Fahrgastzelle, was die Sicherheit der Passagiere bei einem Unfall erhöht.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: einen Schnitt in Fahrzeuglängsrichtung durch einen Bodenbereich einer Karosserie eines Kraftfahrzeugs,
- Fig. 2: eine perspektivische Ansicht und einen Schnitt durch den Boden der Karosserie von Fig. 1 und
- Fig. 3: einen Schnitt in Fahrzeugquerrichtung durch den Bodenbereich der Karosserie eines Kraftfahrzeugs.

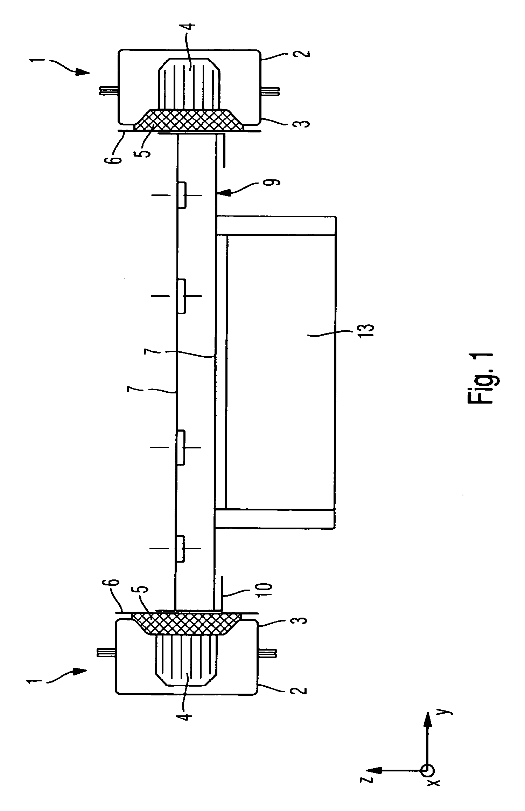

In Fig. 1 ist ein Schnitt in Fahrzeuglängsrichtung x durch eine Karosserie eines Personenkraftfahrzeugs im Bodenbereich dargestellt. Links und rechts wird der Bodenbereich der Karosserie begrenzt durch jeweils einen Seitenschweller 1. Beide Seitenschweller 1 sind in Schalenbauweise gebaut. Sie bestehen aus einer Außenschale 2 und einer Innenschale 3, die jeweils aus einem kohlefaserverstärkten Kunststoff (CFK) bestehen. Die Außenschale 2 und die Innenschale 3 umschließen einen gemeinsamen Hohlraum. Zumindest im - in Fahrzeuglängsrichtung x gesehen - mittleren Bereich der Seitenschweller 1 ist in dem Hohlraum jeweils ein Energieabsorptionselement 4 angeordnet, das sich unter Krafteinwirkung gezielt deformiert und dabei Energie aufnimmt. Auf der der Fahrzeugmitte zugewandten Seite der Innenschale 3 der Seitenschweller 1 ist in einer Vertiefung zur Außenschale 2 hin zusätzlich eine dämpfende Schicht 5 aus einem Kunststoffschaum angebracht. Auf der der Fahrzeugmitte zugewandten Seite dieser dämpfenden Schicht 5 ist wiederum ein Zugband 6 aus einem kohlenfaserverstärkten Kunststoff angebracht, das mit seinem oberen und unteren Randbereich zusätzlich direkt an der Innenschale 3 anliegt.

Der gesamte Seitenschweller 1 kann bei in Fahrzeugquerrichtung y einwirkenden Kräften als Biegeträger betrachtet werden. Dabei wirken auf der Außenseite des Seitenschwellers 1, die der einwirkenden Kraft zugewandt ist, hohe Druckkräfte, während auf der Innenseite des Seitenschwellers 1, die der einwirkenden Kraft abgewandt ist, hohe Zugkräfte wirken. Das Zugband 6 nimmt zumindest einen Teil dieser Zugkräfte auf und verstärkt so die Innenschale 3 des Seitenschwellers 1.

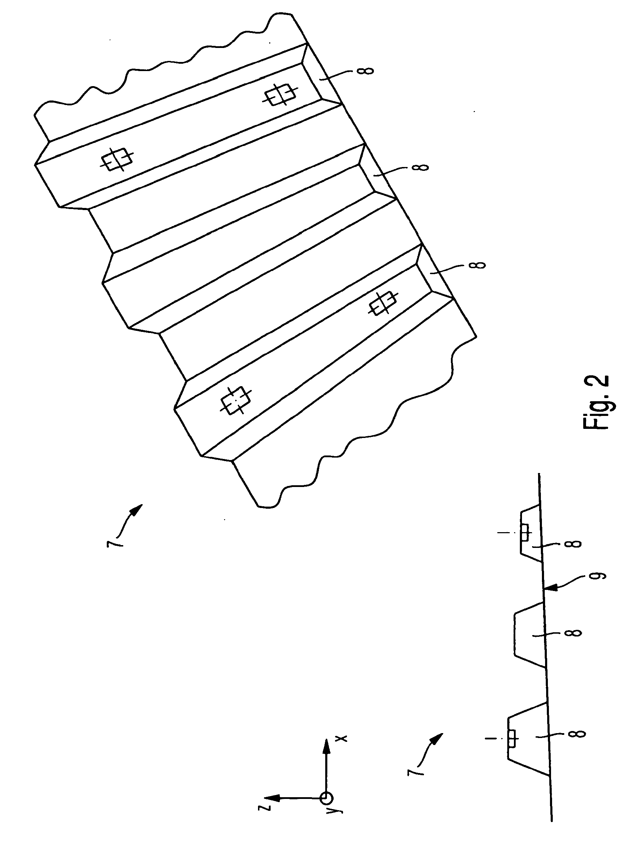

Zwischen den beiden so aufgebauten Seitenschwellern 1 erstreckt sich der Boden 7 des Kraftfahrzeugs. Der Boden 7 wird gebildet von einem Strangpressprofil aus einer Leichtmetalllegierung, das mehrere Hohlkammern 8 aufweist, wie es in Fig. 2 gut erkennbar ist. Die Längserstreckung der Hohlkammern 8 verläuft in Fahrzeugquerrichtung y. Die einzelnen Hohlkammern 8 sind in Fahrzeuglängsrichtung x gesehen hintereinander angeordnet. Jede Hohlkammer 8 weist einen polygonalen, trapezförmigen Querschnitt auf. Dabei steigt die Höhe der Hohlkammern 8 in Fahrzeuglängsrichtung x gesehen nach vorne hin an. Die Unterseite 9 des Bodens 7 ist vollkommen eben. Er ist damit aerodynamisch außerordentlich günstig gestaltet, da er auf der Unterseite 9 keinerlei Erhebungen oder Vertiefungen aufweist, die zu unerwünschten aerodynamischen Verwirbelungen führen könnten. Alle Hohlkammern 8 ragen somit als Erhebungen in Fahrzeughöhenrichtung z in den Fahrzeuginnenraum hinein.

Die Deformation im Bodenbereich erstreckt sich bei einem Seitencrash über den Seitenschweller 1 hinaus in den Boden 7 hinein. Um die restliche, nicht vom Seitenschweller 1 absorbierte Deformationsenergie bei einem Seitencrash möglichst gut in den Boden 7 einleiten zu können, ist der Boden 7 an den Seitenschwellern 1 über Haltewinkel 10 aus einem höherfesten Stahl befestigt. Diese Haltewinkel 10 sind mit einem vertikalen Winkelabschnitt am Seitenschweller 1 befestigt. Der zur Fahrzeugmitte abstehende horizontale Winkelabschnitt dient zur Aufnahme des Bodens 7. Der vertikale Winkelabschnitt, der am Seitenschweller 1 befestigt ist, erstreckt sich möglichst über die gesamte Höhe des Seitenschwellers 1.

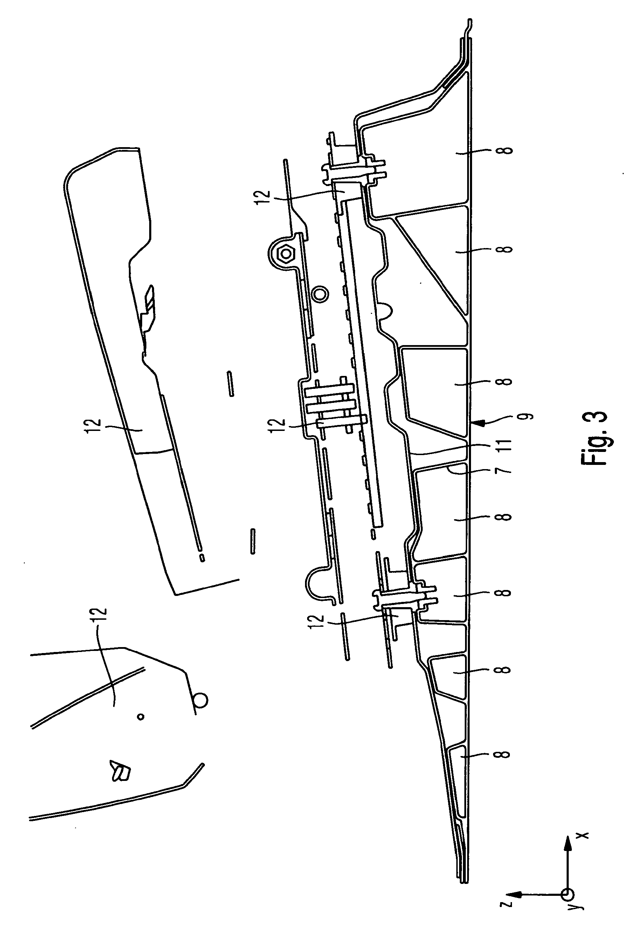

Im Bereich einer Sitzreihe liegt ein flächiges Verstärkungsbauteil 11 aus einem kohlenfaserverstärkten Kunststoff (CFK) auf den Hohlkammern 7 auf, wie es in Fig. 3 dargestellt ist. Das Verstärkungsbauteil 11 erstreckt sich in Fahrzeugquerrichtung y zwischen den beiden Seitenschwellern 1. Zusammen mit dem Boden 7 bildet es einen außerordentlich steifen Sandwich, der relativ zu seiner Steifigkeit ein außerordentlich niedriges Gewicht durch den Einsatz einer Leichtmetalllegierung und kohlenfaserverstärkter Kunststoffe aufweist. Die Fahrzeugsitze 12 der Sitzreihe sind mit dem Boden 7 verbunden.

Bei einem Seitencrash dient der vertikale Winkelabschnitt des Haltewinkels 10 als harter, glatter Anschlag, der die Kräfte gleichmäßig verteilt in das Verstärkungsbauteil 11 einleiten kann. Dadurch bricht das Verstärkungsbauteil 11 kontrolliert am Haltewinkel 10 und nimmt dabei viel Crashenergie auf.

Die Karosserie des Personenkraftfahrzeugs weist zumindest in Fahrzeugquerrichtung y aufgrund des Aufbaus im Bodenbereich eine außerordentlich hohe Steifigkeit auf. Dies ist möglich unter anderem aufgrund der in Fahrzeugquerrichtung y verlaufenden, durchgehenden Hohlkammern 8 im Boden 7. Dies setzt allerdings voraus, dass im mittleren Bereich der Karosserie kein Kardantunnel erforderlich ist. Somit ist der erfindungsgemäße Aufbau des Bodenbereichs insbesondere für Fahrzeuge mit Frontantrieb und / oder für elektrisch angetriebene Fahrzeuge geeignet.

Bei Elektrofahrzeugen stellt die Unterbringung der relativ viel Bauraum beanspruchenden Akkumulatoren stets ein Problem dar. Zudem besteht die Gefahr, dass bei einem Unfall die Akkumulatoren beschädigt werden, was schlimmstenfalls sogar zu einem Brand führen könnte. Bei einem Kraftfahrzeug mit einer Karosserie mit einem erfindungsgemäßen Bodenbereich kann zumindest ein Akkumulator 13 gut an der Unterseite 9 des Bodens 7 befestigt werden, wie es in Fig. 1 gezeigt ist. Der Akkumulator 13 hat dabei eine quaderförmige Grundform, deren Längserstreckung in Fahrzeuglängsrichtung x verläuft. In Fahrzeugquerrichtung y ist er im mittleren Bereich unter dem Boden 7 angeordnet.

Der Akkumulator 13 ist somit außerhalb des Fahrgastraums untergebracht. Er befindet sich unterhalb des Bodens 7 des Fahrgastraums. Dort ist er in Fahrzeuglängsrichtung x sehr gut geschützt, da sich vor dem Fahrgastraum der Vorderwagen der Karosserie und sich hinter dem Fahrgastraum der Hinterwagen der Karosserie erstreckt. Dabei sind der Vorderwagen und der Hinterwagen der Karosserie so konzipiert, dass bei einem Frontal- oder Heckcrash sich der Vorderwagen bzw. der Hinterwagen deformieren, während der Fahrgastraum sich möglichst überhaupt nicht verformt. Auf diese Weise kann die Crashenergie abgebaut werden, und die Passagiere im Fahrgastraum sind geschützt. Der Akkumulator 13 unterhalb des Bodens 7 des Fahrgastraums ist somit ebenfalls bei einem Frontal- oder Heckcrash sehr gut geschützt. Bei einem Seitencrash nehmen die Seitenschweller 1 bereits einen erheblichen Teil der Crashenergie auf. Die restliche Crashenergie wird in den Boden 7 und das Verstärkungsbauteil 11 eingeleitet. Diese sind aufgrund ihrer Struktur aber so steif, dass es hier zu keiner oder nur geringfügigen Deformationen kommt. Die Anordnung des Akkumulators 13 im mittleren Bereich an der Unterseite 9 des Bodens 7 ist somit ideal. Dies ist auch bei einem Seitencrash der am besten geschützte Bereich der Karosserie des Personenkraftfahrzeugs.

Maßgeblich für die hohe Steifigkeit des Bodens 7 in Fahrzeugquerrichtung y ist der flächig und eben zwischen den Seitenschwellern 1 durchgehende Boden 7, die Hohlkammern 8, die sich in Fahrzeugquerrichtung y über die gesamte Breite zwischen den Seitenschwellern 1 erstrecken und im Bereich der Sitze das zusätzliche Verstärkungsbauteil 11.

## Patentansprüche

1. Karosserie für ein Kraftfahrzeug mit einem Boden (7), der sich in Fahrzeugquerrichtung (y) zwischen zwei Seitenschwellern (1) erstreckt, und der aus einem Strangpressprofil besteht, das zumindest eine Hohlkammer (8) aufweist, dessen Längserstreckung in Fahrzeugquerrichtung (y) verläuft, **dadurch gekennzeichnet, dass** der Boden (7) im Bereich einer Sitzreihe versteift ist mit einem dünnen, flächigen Verstärkungsbauteil (11) aus einem faserverstärkten Kunststoff, das sich in Fahrzeugquerrichtung (y) zwischen den beiden Seitenschwellern (1) erstreckt und auf dem Boden (7) aufliegt.

2. Karosserie nach Anspruch 1, **dadurch gekennzeichnet, dass** der Boden (7) eine ebene, flächige Unterseite (9) aufweist.

3. Karosserie nach einem der vorhergehenden Ansprüche, **dadurch gekennzeichnet, dass** der Boden (7) aus einem Leichtmetall oder einer Leichtmetalllegierung besteht.

4. Karosserie nach einem der vorhergehenden Ansprüche, **dadurch gekennzeichnet, dass** zumindest eine Hohlkammer (8) einen polygonalen Querschnitt aufweist.

5. Karosserie nach einem der vorhergehenden Ansprüche, **dadurch gekennzeichnet, dass** die Hohlkammern (8) in Fahrzeuglängsrichtung (x) gesehen vorne höher sind als hinten.

6. Karosserie nach einem der vorhergehenden Ansprüche, **dadurch gekennzeichnet, dass** das Verstärkungsbauteil (11) aus einem kohlenfaserverstärkten Kunststoff (CFK) besteht.

7. Karosserie nach einem der vorhergehenden Ansprüche, **dadurch gekennzeichnet, dass** die Sitze (12) am Boden (7) befestigt sind.

8. Karosserie nach einem der vorhergehenden Ansprüche, **dadurch gekennzeichnet, dass** die Seitenschweller (1) in Schalenbauweise jeweils aus einer Außenschale (2) und einer Innenschale (3) aus einem kohlenfaserverstärkten Kunststoff (CFK) bestehen.

9. Karosserie nach einem der vorhergehenden Ansprüche, **dadurch gekennzeichnet, dass** das Kraftfahrzeug zumindest auch elektrisch antreibbar ist.

10. Karosserie nach Anspruch 9, **dadurch gekennzeichnet, dass** zumindest ein Akkumulator (13) auf der Unterseite (9) des Bodens (7) angebracht ist.

11. Karosserie nach Anspruch 10, **dadurch gekennzeichnet, dass** der zumindest eine Akkumulator (13) sich in Fahrzeuglängsrichtung (x) erstreckt und in Fahrzeugquerrichtung (y) im mittleren Bereich unter dem Boden (7) angeordnet ist.

## Claims

1. A body for a motor vehicle with a floor (7) extending in the transverse direction (y) of the vehicle between two side sillboards (1) and comprising an extruded profile with at least one hollow chamber (8) extending longitudinally in the transverse direction (y) of the vehicle, **characterised in that** near a row of seats the floor (7) is strengthened with a thin flat reinforcing component (11) made of fibre-reinforced plastic and extending in the transverse direction (y) of the vehicle between the two sillboards (1) and resting on the floor (7).

2. A body according to claim 1, **characterised in that** the floor (7) has a level flat underside (9).

3. A body according to any of the preceding claims, **characterised in that** the floor (7) is made of a light metal or a light metal alloy.

4. A body according to any of the preceding claims, **characterised in that** at least one hollow chamber (8) has a polygonal cross-section.

5. A body according to any of the preceding claims, **characterised in that** the hollow chambers (8), seen in the longitudinal direction (x) of the vehicle, are higher at the front than at the back.

6. A body according to any of the preceding claims, **characterised in that** the reinforcing component (11) is made of carbon fibre-reinforced plastics material (CFK).

7. A body according to any of the preceding claims, **characterised in that** the seats (12) are fastened to the floor (7).

8. A body according to any of the preceding claims, **characterised in that** the sillboards (1) are in shell construction, each comprising an outer shell (2) and an inner shell (3) made of a carbon fibre-reinforced plastics material.

9. A body according to any of the preceding claims, **characterised in that** the vehicle can at least also be driven by electricity.

10. A body according to claim 9, **characterised in that** at least one accumulator (13) is disposed on the underside (9) of the floor (7).

11. A body according to claim 10, **characterised in that** the at least one accumulator (13) extends in the longitudinal direction (x) of the vehicle and is disposed in the transverse direction (y) of the vehicle in the middle region under the floor (7).

## Revendications

1. Carrosserie pour un véhicule comprenant un plancher (7) qui s'étend dans la direction transversale (y) du véhicule entre deux traverses latérales (1) et est constitué par un profilé extrudé comportant au moins une chambre creuse (8) dont l'étendue longitudinale et située dans la direction transversale (y) du véhicule,
**caractérisée en ce que**
le plancher (7) est rigidifié dans la zone d'une rangée de sièges par un élément de renforcement plan mince (11) en une matière synthétique renforcée par des fibres qui s'étend dans la direction transversale (y) du véhicule entre les deux traverses latérales (1) et s'appuie sur le fond (7).

2. Carrosserie conforme à la revendication 1,
**caractérisée en ce que**
le plancher (7) comporte un dessous (9) plan lisse.

3. Carrosserie conforme à l'une des revendications précédentes,
**caractérisée en ce que**
le plancher (7) est constitué d'un métal léger ou d'un alliage de métal léger.

4. Carrosserie conforme à l'une des revendications précédentes,
**caractérisée en ce qu'**
au moins une chambre creuse (8) a une section polygonale.

5. Carrosserie conforme à l'une des revendications précédentes,
**caractérisée en ce que**
les chambres creuses (8) sont plus hautes vers l'avant que vers l'arrière dans la direction longitudinale (x) du véhicule.

6. Carrosserie conforme à l'une des revendications précédentes,
**caractérisée en ce que**
l'élément de rigidification (11) est réalisé en un matériau synthétique renforcé par des fibres de carbone (CFK).

7. Carrosserie conforme à l'une des revendications précédentes,
**caractérisée en ce que**
les sièges (12) sont fixés au plancher (7).

8. Carrosserie conforme à l'une des revendications précédentes,
**caractérisée en ce que**
les traverses latérales (1) sont respectivement constituées selon une structure en forme de coquille par une coquille externe (2) et une coquille interne (3) en un matériau synthétique renforcé par des fibres de carbone (CFK).

9. Carrosserie conforme à l'une des revendications précédentes,
**caractérisée en ce que**
le véhicule est au moins également à actionnement électrique.

10. Carrosserie conforme à la revendication 9,
**caractérisée en ce qu'**
au moins un accumulateur (13) est monté au-dessous (9) du plancher (7).

11. Carrosserie conforme à la revendication 10,
**caractérisée en ce que**
l'accumulateur (13) s'étend dans la direction longitudinale (x) du véhicule et est monté dans la direction transversale (y) du véhicule dans la zone médiane au-dessous du plancher (7).
